# EUROPEAN PATENT APPLICATION

(11) **EP 4 836 354 A1**
(43) Date of publication of application: **04.11.2026**
(21) Application number: 24913702.7
(22) Date of filing: 27.12.2024
(51) Int. Cl.: H04L 9/40, H04L 67/00

(54) **METHOD AND SYSTEM FOR WIRED/WIRELESS CYBER SECURITY PATCH FOR SHIP**

(30) Priority: 28.12.2023 KR 20230195138
(71) Applicant: Hanwha Ocean Co., Ltd., Geoje-si, Gyeongsangnam-do 53302 (KR); Cytur Inc., Seoul 08511 (KR)
(72) Inventor: BAE, Yang Sop, Seoul 06082 (KR); KIM, Jeong Tae, Geoje-si, Gyeongsangnam-do 53314 (KR); JO, Yong Hyun, Seoul 08511 (KR)
(74) Representative: Zacco Sweden AB
(86) International application number: PCT/KR2024/021324
(87) International publication number: WO 2025/143898

(57) **Abstract**

The present invention relates to a wired and wireless cybersecurity patching method and system for ships, particularly a wired and wireless cybersecurity patching method and system for ships that can perform patch updates in accordance with the IACS UR E26 requirements to satisfy the need to establish a CBS patch update method and device for ships.

## Description

### [Technical Field]

The present invention relates to a wired and wireless cybersecurity patching method and system for ships, particularly a wired and wireless cybersecurity patching method and system for ships that can perform patch updates in accordance with the IACS UR E26 requirements to satisfy the need to establish a CBS patch update method and device for ships.

### [Background Art]

With the tightening of regulations by the International Maritime Organization (IMO) and classification societies, on-board cybersecurity for ships is required. Among these cybersecurity regulations, security patches and software updates for computer-based systems (e.g., servers or computers) on board are particularly important. Generally, patching methods can be divided into a Patch Management System (PMS)-based patching method and a manual patching method using USB drives or similar devices. However, given the operational nature of ships, the application of patches via satellite has been difficult.

The related art is disclosed in Korean Patent Laid-open Publication No. 10-2023-0045769 (published on April 5, 2023).

### [Disclosure]

### [Technical Problem]

It is one aspect of the present invention to provide a cybersecurity patching method and system for ships that enables remote patch updates without on-site engineer intervention by establishing a wireless patch update scheme.

It is another aspect of the present invention to provide a wired and wireless cybersecurity patching method and system for ships, which enables the application of cybersecurity patches to ships deployed with cybersecurity measures for smart ships and autonomous navigation systems, while allowing continuous patch updates depending on ship operating conditions and locations.

### [Technical Solution]

In accordance with one aspect of the present invention, a ship cybersecurity patching system includes: a system integration server configured to, upon identifying a target CBS to be patched among a plurality of CBSs on a ship, receive patches from respective CBS provider servers and integrate the received patches for the target CBS; a patch deployment server configured to authenticate and encrypt the patches received from the system integration server and deploy the encrypted patches; and a patch update server installed on the ship and configured to authenticate and decrypt the patches received from the patch deployment server, and verify the patches based on a hash, a timestamp and a patch version to apply patch updates, wherein the patch update server continuously applies cybersecurity patch updates based on ship operating conditions and locations.

The patch deployment server may deploy the patches through connection via any one communication method selected from among VSAT, LTE, and Port LAN depending on the ship operating conditions and locations.

The patch update server may further include a backup update server; and if a communication connection is interrupted during the patch updates through the patch update server, the patch update server may save a patch state prior to the interruption through the backup update server and resume the patch updates from a point of interruption once the communication connection is reestablished.

In accordance with another aspect of the present invention, a ship cybersecurity patching method includes: a patch reception step in which, upon identifying a target CBS to be patched among a plurality of CBSs on a ship, a system integration server receives patches from respective CBS provider servers and integrates the received patches for the target CBS; a patch distribution step in which a patch deployment server authenticates and encrypts the patches received in the patch reception step, and deploys the encrypted patches; and a patch update step in which a patch update server on the ship receives the patches deployed in the patch distribution step, authenticates and decrypts the received patches, and verifies the patches based on a hash, a timestamp, and a patch version to apply patch updates, wherein, in the patch update step, cybersecurity patch updates are continuously applied based on ship operational conditions and locations.

In the patch distribution step, the patches may be deployed through connection via any one communication method selected from among VSAT, LTE, and Port LAN depending on the ship operating conditions and locations.

In the patch update step, the patch update server may further include a backup update server; and if a communication connection is interrupted during the patch updates through the patch update server, the patch update server may save a patch state prior to the interruption through the backup update server and resume the patch updates from a point of interruption once the communication connection is reestablished.

### [Advantageous Effects]

Embodiments of the present invention provide a ship cybersecurity patching method and system that enables remote patch updates without on-site engineer intervention by establishing a wireless patch update scheme.

Embodiments of the present invention provide a ship cybersecurity patching method and system that enables the application of cybersecurity patches to ships deployed with cybersecurity measures for smart ships and autonomous navigation systems, while allowing continuous patch updates depending on ship operating conditions and locations.

### [Description of Drawings]

FIG. 1 is a diagram illustrating a wired and wireless ship cybersecurity patching system according to the present invention.
FIG. 2 is a flowchart illustrating a wired and wireless ship cybersecurity patching method according to the present invention.

### [Best Mode]

The above and other aspects, features, and advantages of the present invention will become apparent from the detailed description of the following embodiments in conjunction with the accompanying drawings.

The terminology used herein is for the purpose of describing particular embodiments and is not intended to be limiting. As used herein, the terms "comprises," "comprising," "includes," and/or "including," when used in this specification, specify the presence of stated features, integers, steps, operations, elements, components, and/or groups thereof, but do not preclude the presence or addition of one or more other features, integers, steps, operations, elements, components, and/or groups thereof. Further, as used herein, the singular forms "a", "an" and "the" are intended to include the plural forms as well, unless the context clearly indicates otherwise.

Hereinafter, exemplary embodiments of the present invention will be described in detail with reference to the accompanying drawings. It should be understood that the embodiments are provided for complete disclosure and thorough understanding of the present invention by those skilled in the art and that the present invention is not limited to the following embodiments and may be embodied in different ways by those skilled in the art.

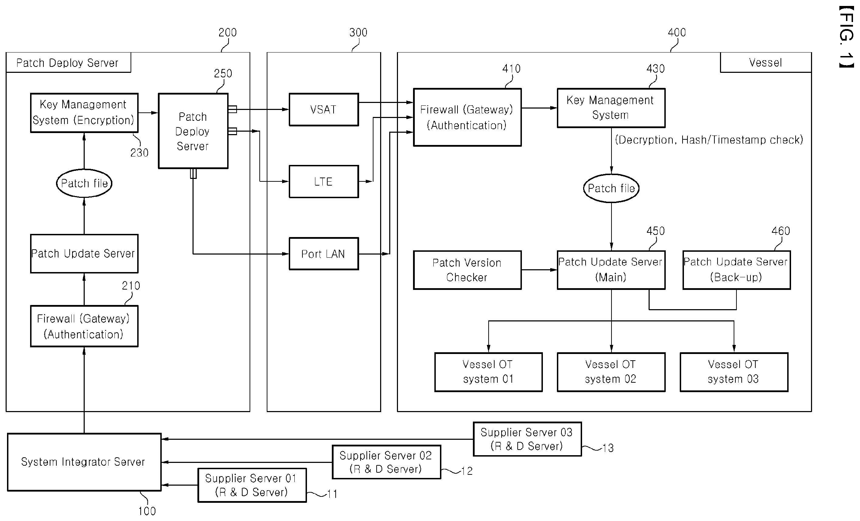

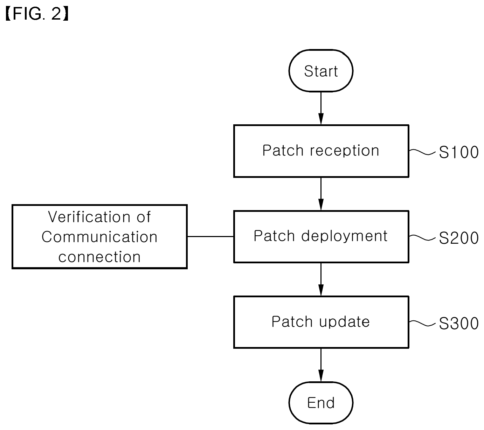

Referring to FIG. 1 and FIG. 2, a wireless and wired ship cybersecurity patching method and system according to embodiments of the present invention will be described.

A wired and wireless ship cybersecurity patching system according to one aspect of the present invention establishes a method and system for CBS patch updates for ships in accordance with the IACS UR E26 requirements.

The ship cybersecurity patching system according to the present invention includes: a system integration server 100 configured to, upon identifying a target CBS to be patched among a plurality of shipboard CBSs (Computer-Based Systems) on a ship 400, receive patches from respective CBS provider servers 10 and integrate the received patches for the target CBS; a patch deployment server 200 configured to authenticate and encrypt the patches received from the system integration server 100 and deploy the encrypted patches; and a patch update server 450 installed on the ship 400 and configured to authenticate and decrypt the patches received from the patch deployment server 200, and verify the patches based on a hash, a timestamp and a patch version to apply patch updates.

The patch update server 450 may continuously apply cybersecurity patch updates based on ship operating conditions and locations.

In other words, given the operational nature of the ship, the patch updates may be executed via wireless communication while the ship is underway or at berth.

For example, the patch updates may be applied via VSAT (Very Small Aperture Terminal) while underway, or via 5G or LTE (Long Term Evolution) at berth.

Thus, the patch deployment server 200 may deploy the patches through connection via any one communication unit 300 selected from among VSAT, LTE, and Port LAN(local area network) depending on the ship operating conditions and locations

In addition, by deploying the encrypted patches via a key management system, the patch deployment server 200 may apply the patches while maintaining security even when other ships receive the patch data.

More specifically, upon identifying a target CBS to be patched among a plurality of CBSs on the ship, the system integration server 100 receives patches from respective provider servers 11 to 13.

Then, the patch deployment server 200 may authenticate the patch received from the system integration server 100 via a firewall 210, encrypt the received patch through the key management system 230, and deploy the encrypted patch by selecting an effective communication method based on the ship operating conditions and locations.

That is, the patch deployment server 200 may deploy the patch via any one communication unit 300 selected from among VSAT, LTE, and Port LAN (local area network) depending on the ship operating conditions and locations.

As such, the ship cybersecurity patching system according to the present invention authenticates a patch received from the ship 400 through the firewall 410, decrypts the patch via the key management system 430, verifies a hash and a timestamp of the patch, checks a patch version through the patch update server 450, and applies patch updates to the Operational Technology (OT) system of each CBS on the ship.

In addition, the patch update server 450 may further include a backup update server 460. Thus, if a communication connection is interrupted during the patch updates through the patch update server 450, the patch update server 450 may save a patch state prior to the interruption via the backup update server 460 and may resume the patch updates from a point of interruption once the communication connection is reestablished.

With this configuration, the ship cybersecurity patching system ensures that cybersecurity patch updates can be continuously applied based on the ship operating conditions and locations.

Referring to FIG. 2, a ship cybersecurity patching method according to the present invention includes a patch reception step S100 in which, upon identifying a target CBS to be patched among a plurality of CBSs on a ship, a system integration server receives patches from respective CBS provider servers and integrates the received patches for the target CBS; a patch distribution step S200 in which a patch deployment server authenticates and encrypts the patches received in the patch reception step S100 is authenticated and encrypted, and deploy the encrypted patches; and a patch update step S300 in which a patch update server on the ship receives the patches deployed in the patch distribution step S200, authenticates and decrypts the received patches, and verifies the patches based on a hash, a timestamp, and a patch version to apply patch updates.

In the patch update step S300, cybersecurity patch updates are continuously applied based on ship operational conditions and locations.

Furthermore, in the patch distribution step S200, the patches may be deployed through connection via any one communication method selected from among VSAT, LTE, and Port LAN depending on the ship operational status and location.

In addition, in the patch update step S300, the patch update server 450 may further include a backup update server 460. If a communication connection is interrupted during the patch updates via the patch update server 450, the backup update server 460 may save a patch state prior to the interruption, and may resume the patch updates from a point of interruption once the communication connection is reestablished.

Therefore, according to the present invention, the cybersecurity patching method and system enables remote patch updates without on-site engineer intervention by establishing a wireless patch update scheme.

Furthermore, according to the present invention, the cybersecurity patching method and system enables the application of cybersecurity patches to ships deployed with cybersecurity measures for smart ships and autonomous navigation systems, while allowing continuous patch updates depending on ship operating conditions and locations.

The embodiments of the present invention described above may be implemented in the form of program instructions executable by various computer components and recorded on a computer-readable recording medium. The computer-readable recording medium may include program instructions, a data file, a data structure, and the like, solely or in combination. The program instructions recorded on the computer-readable recording medium may be specially designed and constructed for the present invention or may be those known and available to those skilled in the art of computer software. Examples of the computer-readable medium include a hardware device specifically configured to store and execute the program instructions, including: magnetic media, such as hard disks, floppy disks, and magnetic tape; optical recording media, such as CD-ROMs and DVDs; magneto-optical media, such as floptical disks; ROM; RAM; and flash memory. Examples of the program commands include not only machine language code generated by a compiler, but also high-level language code executable on a computer using an interpreter or the like. The hardware device may be configured to operate as one or more software modules to perform the operations according to the present invention, or vice versa.

Although some embodiments have been described herein, it should be understood that these embodiments are provided for illustration only and are not to be construed in any way as limiting the present invention, and that various modifications and changes can be made by those skilled in the art without departing from the spirit and scope of the invention. Therefore, the accompanying claims and their equivalents are intended to cover such changes or modifications as would fall within the scope and spirit of the invention.

### [List of Reference numerals]

10: Provider server
100: System integration server
200: Patch distribution server
300: Communication unit
400: Ship
450: Patch update server

## Claims

1. A ship cybersecurity patching system comprising:
a system integration server configured to, upon identifying a target CBS to be patched among a plurality of CBSs on a ship, receive patches from respective CBS provider servers and integrate the received patches for the target CBS;
a patch deployment server configured to authenticate and encrypt the patches received from the system integration server and deploy the encrypted patches; and
a patch update server installed on the ship and configured to authenticate and decrypt the patches received from the patch deployment server, and verify the patches based on a hash, a timestamp and a patch version to apply patch updates,
wherein the patch update server continuously applies cybersecurity patch updates based on ship operating conditions and locations.

2. The ship cybersecurity patching system according to claim 1, wherein the patch deployment server deploys the patches through connection via any one communication method selected from among VSAT, LTE, and Port LAN depending on the ship operating conditions and locations.

3. The ship cybersecurity patching system according to claim 1, wherein
the patch update server further comprises a backup update server; and
if a communication connection is interrupted during the patch updates through the patch update server, the patch update server saves a patch state prior to the interruption through the backup update server and resumes the patch updates from a point of interruption once the communication connection is reestablished.

4. A ship cybersecurity patching method, comprising:
a patch reception step in which, upon identifying a target CBS to be patched among a plurality of CBSs on a ship, a system integration server receives patches from respective CBS provider servers and integrates the received patches for the target CBS;
a patch distribution step in which a patch deployment server authenticates and encrypts the patches received in the patch reception step, and deploys the encrypted patches; and
a patch update step in which a patch update server on the ship receives the patches deployed in the patch distribution step, authenticates and decrypts the received patches, and verifies the patches based on a hash, a timestamp, and a patch version to apply patch updates,
wherein, in the patch update step, cybersecurity patch updates are continuously applied based on ship operational conditions and locations.

5. The ship cybersecurity patching method according to claim 4, wherein, in the patch distribution step, the patches are deployed through connection via any one communication method selected from among VSAT, LTE, and Port LAN depending on the ship operating conditions and locations.

6. The ship cybersecurity patching method according to claim 4, wherein, in the patch update step, the patch update server further comprises a backup update server; and
if a communication connection is interrupted during the patch updates through the patch update server, the patch update server saves a patch state prior to the interruption through the backup update server and resumes the patch updates from a point of interruption once the communication connection is reestablished.
